# EUROPEAN PATENT SPECIFICATION

(11) **EP 4 012 300 B1**
(45) Date of publication and mention of the grant of the patent: **18.11.2026**
(21) Application number: 20878401.7
(22) Date of filing: 03.09.2020
(51) Int. Cl.: F25B 47/02, F24F 11/42, F25B 13/00, F25B 41/20, F25B 43/00, F25B 49/02

(54) **CONTINUOUS HEATING CONTROL SYSTEM AND ASSOCIATED METHOD**
SYSTEM UND VERFAHREN ZUR KONTINUIERLICHEN HEIZUNGSREGELUNG UND KLIMAANLAGE
SYSTÈME ET PROCÉDÉ DE RÉGULATION DE CHALEUR CONTINUE

(30) Priority: 23.10.2019 CN 201911014181
(43) Date of publication of application: 15.06.2022
(73) Proprietor: Gree Electric Appliances, Inc. of Zhuhai, Zhuhai, Guangdong 519070 (CN)
(72) Inventor: LIU, Hua, Zhuhai, Guangdong 519070 (CN); ZHANG, Shiqiang, Zhuhai, Guangdong 519070 (CN); LI, Limin, Zhuhai, Guangdong 519070 (CN); ZHOU, Chao, Zhuhai, Guangdong 519070 (CN); JIN, Mengmeng, Zhuhai, Guangdong 519070 (CN); ZHU, Shiqiang, Zhuhai, Guangdong 519070 (CN)
(74) Representative: Lavoix
(86) International application number: PCT/CN2020/113188
(87) International publication number: WO 2021/077915

(56) References cited:
- CN-A- 101 086 405
- CN-A- 101 476 801
- CN-A- 101 476 801
- CN-A- 101 539 348
- CN-A- 101 539 348
- CN-A- 101 858 631
- CN-A- 104 634 020
- CN-A- 109 798 701
- CN-A- 110 173 941
- CN-A- 110 173 941
- CN-A- 110 173 941
- CN-A- 110 645 745
- CN-A- 110 645 746
- CN-A- 111 102 770
- CN-A- 111 102 771
- CN-A- 111 102 773
- CN-A- 111 288 694
- CN-B- 103 727 714
- CN-U- 205 403 232
- CN-U- 210 154 145
- CN-U- 210 801 719
- CN-U- 211 739 589
- CN-U- 211 739 592
- CN-Y- 2 816 701
- US-A- 4 215 555
- US-B2- 10 024 588

## Description

### CROSS-REFERENCE TO RELATED APPLICATIONS

The present application is based on and claims priority to China Patent Application No. 201911014181.2 filed on October 23, 2019.

### TECHNICAL FIELD

The present invention relates to the technical field of units, and in particular, to a continuous heating control system and method,an air-conditioning device and a non-transitory computer-readable storage medium.

### BACKGROUND

At present, an air-conditioning device is becoming a heating device. For the air-conditioning device, the phenomenon of frosting and defrosting during heating operation may affect the operational comfort of the user.

When the air-conditioning device is in a heating operation, a refrigerant in an outdoor heat exchanger evaporates and absorbs heat, which may result in frosting on the outdoor heat exchanger. When it is seriously frosted, it will affect the heat exchange effect of the outdoor heat exchanger, which in turn affects the heating performance of the indoor unit.

In the air-conditioning device known by the inventors of the present invention, when it is detected that the outdoor heat exchanger is seriously frosted, the unit may switch a four-way valve, so that the high-temperature and high-pressure refrigerant from an exhaust port of a compressor enters the outdoor heat exchanger to provide heat for defrosting. However, at this time, the indoor unit is in a cooling state, so that the indoor temperature will drop, thereby affecting the comfort.

In view of the above-described problems, in the related art, an efficient and reliable continuous heating control method is provided to implement that the four-way valve is not switched during defrosting, and the indoor unit performs continuous heating. For example, a continuous heating control method known by the inventors of the present invention is a defrosting method by dividing the outdoor unit into areas. That is, the outdoor heat exchanger is divided into two areas which take turns to perform defrosting when defrosting is required, so that the indoor unit may continue to maintain a heating state.

CN110173941A is considered to present the closest prior art and discloses an air conditioning system, wherein the air conditioning system comprises: a compressor, an indoor heat exchanger and an outdoor heat exchanger that are communicated in sequence; a bypass mechanism communicated between the outdoor heat exchanger and the discharge end of the compressor, wherein the bypass mechanism comprises a bypass pipeline and a first on-off valve, and one end of the bypass pipeline is communicated with the exhaust end of the compressor, another end of the bypass pipeline is communicated with the outdoor heat exchanger, and the first on-off valve is assembled to the bypass pipeline superior; and a heating mechanism, the heating mechanism being communicated with the liquid discharge port of a gas-liquid separator and the suction end of the compressor.

CN109798701A discloses an air conditioning control system, comprising a compressor, a gas-liquid separator, and an outdoor heat exchanger. The air conditioning control system further comprises a liquid separation device, one end of the liquid separation device being connected to the gas-liquid separator, and the other end of the liquid separation device being connected to the compressor, wherein a heating device is installed at the bottom of the liquid separation device; and a bypass branch, one end of the bypass branch being connected to the exhaust side of the compressor, and the other end of the bypass branch being connected to the outdoor heat exchanger, wherein a bypass valve is provided on the bypass branch.

CN101476801A discloses a heat pump type air conditioner, comprising a compressor, a four-way valve, an outdoor heat exchanger, an indoor heat exchanger, and a refrigerant electric heater, a gas-liquid separator, a first solenoid valve, a capillary tube, a first one-way valve, a second one-way valve, and a second solenoid valve, wherein the first one-way valve, the capillary tube and the first solenoid valve form a first branch, the second solenoid valve and the second one-way valve constitutes a second branch, and the refrigerant electric heater is connected to the gas-liquid separator.

### SUMMARY

According to the present invention the above objective is solved by the features of the independent claims. Preferred embodiments are defined in the dependent claims.

In a first aspect of the present invention, there is provided a continuous heating control system, comprising: a bypass pipeline, an oil separator, an outdoor heat exchanger, a gas separator, a defrosting solenoid valve and a heating structure, wherein the defrosting solenoid valve is arranged on the bypass pipeline, wherein one end of the bypass pipeline is connected to the oil separator, and another end of the bypass pipeline is connected to the outdoor heat exchanger, and the heating structure is arranged at a bottom of the gas separator and configured to heat the gas separator, wherein the heating structure comprises: a heating tank arranged at the bottom of the gas separator, wherein a first pipeline connected to the heating tank is provided at the bottom of the gas separator, wherein the first pipeline is provided with a liquid inlet valve, and a first electrical heating member arranged outside the heating tank. The continuous heating control system further comprises: a supercooler electronic expansion valve, a supercooler, an enthalpy increasing tube and a first branch, wherein a first end of the first branch is arranged in a pipeline between a rear end of the supercooler electronic expansion valve and the supercooler, a second end of the first branch is connected to the enthalpy increasing tube, the first branch is provided with a second electrical heating member and a first enthalpy increasing valve, and a third end of the first branch is arranged between the second electrical heating member and the first enthalpy increasing valve and is connected to the heating tank. The continuous heating control system further comprises: a second pipeline connected between an outlet pipe of the gas separator and the heating tank, wherein the second pipeline is provided with a pressure balancing valve; and a third pipeline, wherein one end of the third pipeline is connected to the heating tank, and another end of the third pipeline is connected to two branches, one branch of the two branches being connected to a suction pipe of a compressor, and another branch of the two branches being connected to an enthalpy increasing tube, wherein the one branch connected to the suction pipe of the compressor is provided with an exhaust valve, and the another branch connected to the enthalpy increasing tube is provided with a second enthalpy increasing valve. The continuous heating control system further comprises: a heating electronic expansion valve, a jet enthalpy electronic expansion valve, a supercooling solenoid valve and a four-way valve, wherein the heating electronic expansion valve is provided on a pipeline between the outdoor heat exchanger and the supercooler, the jet enthalpy electronic expansion valve is provided on a pipeline from the first enthalpy increasing valve to the supercooler, and the supercooling solenoid valve is provided on a pipeline from the supercooler to the gas separator.

In an embodiment of the first aspect, one end of the defrosting solenoid valve is connected to a front portion or a rear portion of a capillary tube of the outdoor heat exchanger.

In a second aspect of the present invention, there is provided an air-conditioning device, comprising the continuous heating control system according to the first aspect.

In a third aspect of the present invention, there is provided a continuous heating control method, applied to the continuous heating control system according to the first aspect, comprising: controlling the defrosting solenoid valve to be turned on, controlling a supercooling solenoid valve to be turned on, controlling a liquid inlet valve to be turned on, controlling an exhaust valve to be turned on, controlling a heating electronic expansion valve to be turned off, and controlling a supercooler electronic expansion valve to be turned on to a maximum number of steps after receiving a defrosting start instruction; and controlling a first electrical heating member to start operation, wherein the supercooling solenoid valve is arranged between a gas separator and a supercooler, and the heating electronic expansion valve is arranged between the supercooler and the outdoor heat exchanger.

In an embodiment of the third aspect, the method according to the third aspect further comprises: controlling the defrosting solenoid valve to be turned off, controlling the liquid inlet valve to be turned off, controlling the exhaust valve to be turned off, and controlling the supercooling solenoid valve, the heating electronic expansion valve and the supercooler electronic expansion valve to all resume normal control after receiving a defrosting end instruction; and controlling the first electrical heating member to stop operation.

In a fourth aspect of the present invention, there is provided a non-transitory computer-readable storage medium having stored thereon a computer program which, when executed by a processor, implements the method according to the third aspect.

### BRIEF DESCRIPTION OF THE ACCOMPANYING DRAWINGS

The accompanying drawings which constitute part of this specification, illustrate the exemplary embodiments of the present invention, and together with this specification, serve to explain the principles of the present invention.

The present invention may be more explicitly understood from the following detailed description with reference to the accompanying drawings, in which:
Fig. 1 is a schematic structural view of a continuous heating control system according to an embodiment of the present invention;
Fig. 2 is another schematic structural view of a continuous heating control system according to some embodiments of the present invention;
Fig. 3 is a schematic view of heating operation according to some embodiments of the present invention;
Fig. 4 is a schematic view of defrosting operation according to some embodiments of the present invention;
Fig. 5 is a flowchart of a continuous heating control method according to an embodiment of the present invention.

It should be understood that the dimensions of various parts shown in the accompanying drawings are not necessarily drawn according to actual proportional relations. In addition, the same or similar components are denoted by the same or similar reference signs.

### DETAILED DESCRIPTION

In order to make the object, technical solution and advantages of the present invention more explicit, the present invention will be described in detail in embodiments below in conjunction with the accompanying drawings

The terms used in the embodiments of the present invention are for the purpose of describing particular embodiments only, but not intended to limit the present invention. As used in the embodiments of the present invention and the appended claims, the singular forms "a", "the" and "this" are also intended to comprise plural forms, unless explicitly denoted in the context otherwise, and "a plurality of" generally contains at least two.

It should be understood that the term "and/or" used herein is only an associated relationship to describe associated objects, which indicates that there may be three relationships, for example, A and/or B, which may indicate such three cases that A is present alone, A and B are present at the same time, or B is present alone. In addition, the character "/" herein generally indicates that the associated objects in the context are in an "or" relationship.

Depending on the context, the words "if" and "in the case of" as used here may be construed as "during..." or "when..." or "in response to determining" or "in response to detecting". Similarly, depending on the context, the phrases "if determined" or "if (the stated condition or occurrence) is detected" may be construed as "when determined" or "in response to determining" or "when (the stated condition or occurrence) is detected)" or "in response to detecting (the stated condition or occurrence)".

It should also be noted that, the terms "comprising", "including" or any other variation thereof are intended to encompass a non-exclusive inclusion such that a product or device comprising a series of elements not only comprises those elements, but also comprises other elements not explicitly listed, or alternatively comprises inherent elements of such product or device. In the case where a further restriction is not made, an element delimited by the phrase "comprising a..." does not exclude the presence of additional identical elements in the product or device that comprises said element.

The inventors of the present invention have found that, there might be drawbacks in the defrosting method by dividing the outdoor unit into areas. For example, during defrosting, a heat exchange area on an evaporation side of the air-conditioning device becomes smaller, and a heat exchange area on a condensation side becomes larger, which may make the heating effect of the indoor unit worse. In addition, the divided areas take turn to perform defrosting, which may also make the defrosting time longer. Therefore, the defrosting method by dividing the outdoor unit into areas might be present with the problem of slow defrosting and attenuated heating capacity.

In view of this, the embodiments of the present invention provide a continuous heating control system, so as to achieve the effect of no attenuation of heating capacity and fast defrosting as much as possible. The embodiments of the present invention will be described in detail below in conjunction with the accompanying drawings.

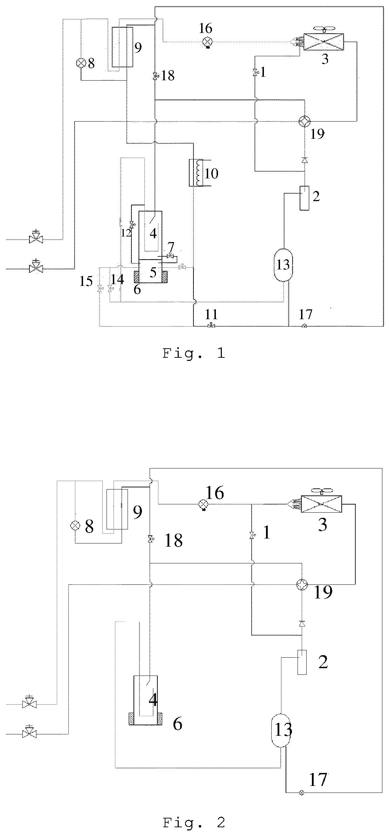

Fig. 1 is a schematic structural view of a continuous heating control system according to the present invention. As shown in Fig. 1, in the system, a bypass pipeline is added on the basis of the known heat pump system. The system comprises the bypass pipeline, an oil separator 2, an outdoor heat exchanger 3, a gas separator 4, a defrosting solenoid valve 1 and a heating structure. The defrosting solenoid valve 1 is arranged on the bypass pipeline, wherein one end of the bypass pipeline is connected to the oil separator 2, and another end of the bypass pipeline is connected to the outdoor heat exchanger 3.In one embodiment, one end of the defrosting solenoid valve 1 is directly connected to a front portion or a rear portion of a capillary tube of the outdoor heat exchanger 3. The heating structure is arranged at a bottom of the gas separator 4 and is configured to heat the gas separator 4. The heating structure comprises a heating tank 5. The heating tank 5 is arranged at the bottom of the gas separator 4. A first pipeline connected to the heating tank 5 is provided at the bottom of the gas separator 4. The heating structure also comprises a first electrical heating member 6. The first electrical heating member 6 is arranged outside the heating tank. The first pipeline is provided with a liquid inlet valve 7.

In the above-described continuous heating control system of Fig.1, the bypass pipeline is provided, wherein one end of the bypass pipeline is connected to an oil separator, and another end of the bypass pipeline is connected to an outdoor heat exchanger, wherein a defrosting solenoid valve is provided on the bypass pipeline, and a heating structure is provided at a bottom of a gas separator, the heating structure is configured to heat the gas separator. This can achieve the effect of no attenuation of heating capacity and fast defrosting as much as possible.

The system further comprises: a supercooler electronic expansion valve 8, a supercooler 9, an enthalpy increasing tube and a first branch. A first end of the first branch is arranged in a pipeline between a rear end of the supercooler electronic expansion valve (i.e., a supercooler EXV) 8 and the supercooler 9, and a second end of the first branch is connected to the enthalpy increasing tube. The first branch is provided with a second electrical heating member 10 and a first enthalpy increasing valve 11. A third end of the first branch is arranged between the second electrical heating member 10 and the first enthalpy increasing valve 11 and is connected to the heating tank 5.

The system further comprises: a second pipeline connected between an outlet pipe of the gas separator 4 and the heating tank 5. The second pipeline is provided with a pressure balancing valve 12. The system further comprises: a third pipeline, wherein one end of the third pipeline is connected to the heating tank 5, and another end of the third pipeline is connected to two branches. One branch of the two branches is connected to a suction pipe of a compressor 13, and the one branch is provided with an exhaust valve 14. The other branch of the two branches is connected to the enthalpy increasing tube, and the other branch is provided with a second enthalpy increasing valve 15. The branch connected to the suction pipe of the compressor 13 is provided with the exhaust valve 14, and the branch connected to the enthalpy increasing tube is provided with the second enthalpy increasing valve 15. In the system of Fig. 1, a pipeline between the outdoor heat exchanger 3 and the supercooler 9 is provided with a heating electronic expansion valve (i.e., a heating EXV) 16. A pipeline from the first enthalpy increasing valve 11 to the supercooler 9 is provided with a jet enthalpy electronic expansion valve (i.e., a jet enthalpy EXV) 17. A pipeline from the supercooler 9 to the gas separator 4 is provided with a supercooling solenoid valve 18. The system further comprises: the heating electronic expansion valve 16, the jet enthalpy electronic expansion valve 17 and the supercooling solenoid valve 18. Additionally, as shown in Fig. 1, the system further comprises a four-way valve 19.

The technical solution of the present invention is applied to use the hot air bypass and gas separation heating technology, so that the high-temperature and high-pressure refrigerant exiting from the exhaust may be directly guided to the outdoor heat exchanger for defrosting and to the indoor heat exchanger for heating during defrosting. The condensed refrigerant directly enters the gas separator, and then enters the heating tank from the gas separator so as to be heated and evaporated within the heating tank, so that it is possible to maintain that the heating capacity is not attenuated. The above-described system of the present invention can achieve the effect of no switch of the four-way valve, no attenuation of heating capacity and fast defrosting during defrosting.

Fig. 2 is another schematic structural view of the continuous heating control system according to some embodiments of the present invention. As shown in Fig. 2, the bypass pipeline exiting from the exhaust pipe of the compressor 13 is connected to the front portion of the capillary tube of the outdoor heat exchanger 3. At this time, the inflowing refrigerant is throttled by the capillary tube before entering the heat exchanger for defrosting.

Based on the above-described analysis, it is known that a bypass pipeline is added on the basis of the known heat pump system, with one end of the bypass pipeline connected to the oil separator exiting 2 from the exhaust pipe of the compressor, and the other end of the bypass pipeline connected to the capillary tube of the outdoor heat exchanger. The bypass pipeline is provided with a defrosting solenoid valve 1. Furthermore, a branch (i.e., the first branch) is added, with a first end of the branch provided in the pipeline between the rear end of the supercooler electronic expansion valve and the supercooler. The branch is provided with an electrical heating member 10 (i.e., the above-described second electrical heating member 10) and an enthalpy increasing valve 11 (i.e., the above-described first enthalpy increasing valve 11). A third end of the branch enters the heating tank 5 below the gas separator 4, and a second end of the branch is connected to the enthalpy increasing tube. The heating tank 5 is provided below the gas separator 4, and an electrical heating member 6 (i.e., the above-described first electrical heating member 6) is provided outside the heating tank 5. A pipeline connected to the heating tank 5 is arranged at the bottom of the gas separator 4, and a liquid inlet valve 7 is provided in the pipeline. A pipeline is connected between the outlet pipe of the gas separator 4 and the heating tank 5, and a pressure balancing valve 12 is provided in the pipeline. Another pipeline exiting from the heating tank 5 is connected to two branches, wherein one branch of the two branches is connected to the suction pipe of the compressor and is provided with an exhaust valve 14, and the other branch of the two branches is connected to an enthalpy increasing tube and is provided with an enthalpy increasing valve 15 (i.e., the above-described second enthalpy increasing valve 15).

The embodiments also provide an air-conditioning device, comprising the continuous heating control system introduced above. The air-conditioning device uses the hot air bypass and gas separation heating technology, so that the high-temperature and high-pressure refrigerant exiting from the exhaust can be directly guided to the outdoor heat exchanger for defrosting and to the indoor heat exchanger for heating during defrosting. The condensed refrigerant directly enters the gas separator, and then enters the heating tank from the gas separator. The refrigerant is heated and evaporated within the heating tank, so that it is possible to maintain that the heating capacity is not attenuated. The air-conditioning device can achieve the effect of no switch of the four-way valve 19, no attenuation of heating capacity and fast defrosting during defrosting.

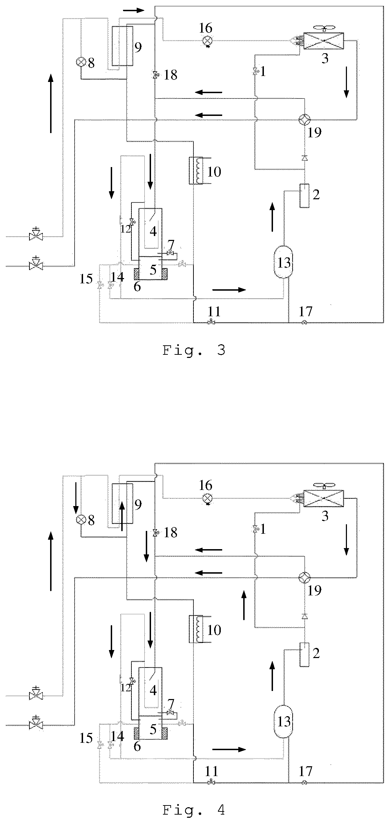

Fig. 3 is a schematic view of heating operation according to some embodiments of the present invention. As shown in Fig. 3, a direction of an arrow indicates a flow direction of the refrigerant. When the air-conditioning device is in heating operation, the four-way valve 19 is in a power-on state. After the compressor 13 compresses the refrigerant into high-temperature and high-pressure gas, the high-temperature and high-pressure gas passes through the oil separator 2, and then passes through the four-way valve 19, and leads to the indoor unit (not shown). After the refrigerant condenses and releases heat in the indoor unit, the refrigerant becomes a liquid and then returns to the outdoor unit. After the refrigerant returning from the indoor unit and passes through the supercooler 9, the refrigerant is throttled and depressurized by the heating electronic expansion valve 16 to become a low-temperature and low-pressure liquid, and then evaporates and absorbs heat in the outdoor heat exchanger 3 to become a gas. The gaseous refrigerant exits from the outdoor heat exchanger 3, passes through the four-way valve 19, enters the gas separator 4, and is sucked into the compressor 13 from the gas separator 4 for compression, thus completing a heating cycle.

Fig. 4 is a schematic view of defrosting operation according to some embodiments of the present invention. As shown in Fig. 4, a direction of an arrow indicates a flow direction of the refrigerant. When the air-conditioning device receives a defrosting instruction, the defrosting solenoid valve 1 is turned on, the supercooling solenoid valve 18 is turned on, the liquid inlet valve 7 is turned on, the exhaust valve 14 is turned on, the heating electronic expansion valve 16 is turned off, the supercooler electronic expansion valve 8 is turned on to a maximum number of steps, and the first electrical heating member 6 starts operation. At this time, the refrigerant compressed by the compressor 13 is divided into two paths, wherein one path still leads to the indoor unit (not shown) for heating, and the other path reaches the outdoor heat exchanger 3 through the bypass branch to defrosts the outdoor heat exchanger 3, and then enters the gas separator 4. The liquid refrigerant returned from the indoor unit no longer enters the outdoor heat exchanger 3, but directly passes through the supercooler 9 and then enters the gas separator 4. There is more liquid refrigerant entering the gas separator 4, the liquid refrigerant enters the heating tank 5 through the liquid inlet valve 7, become a gaseous refrigerant after evaporating and absorbing heat in the heating tank 5, exit from the exhaust valve 14, and enter the suction pipe of the compressor 13. After defrosting ends, the defrosting solenoid valve 1 is turned off, the liquid inlet valve 7 is turned off, and the exhaust valve 14 is turned off, the first electrical heating member 6 stops operation, and the supercooling solenoid valve 18, the heating electronic expansion valve 16, and the supercooler electronic expansion valve 8 resume normal control.

During defrosting, since the gaseous refrigerant exiting from the compressor is required to heat the indoor unit and defrost the outdoor heat exchanger, a compressor frequency greater than a compressor frequency during normal heating operation may be applied to maintain the effect of heating and defrosting. The above-described method is different from the defrosting method in divided areas in that the heating member of the gas separator is used to enhance the heat exchange effect on the evaporation side of the system, so that the overall heating effect of the system is not attenuated.

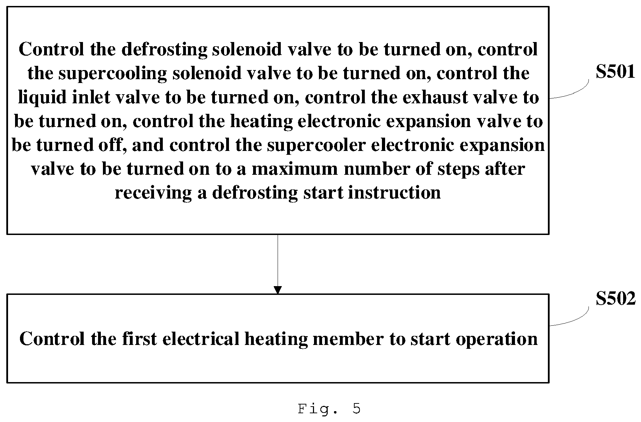

Fig. 5 is a flowchart of a continuous heating control method according to the present invention. The continuous heating control method is applied to the above-described continuous heating control system. As shown in Fig. 5, the method comprises steps S501 to S502.

In step S501, the defrosting solenoid valve is controlled to be turned on, the supercooling solenoid valve is controlled to be turned on, the liquid inlet valve is controlled to be turned on, the exhaust valve is controlled to be turned on, the heating electronic expansion valve is controlled to be turned off, and the supercooler electronic expansion valve is controlled to be turned on to a maximum number of steps after a defrosting start instruction is received.

In step S502, the first electrical heating member is controlled to start operation.

The supercooling solenoid valve is arranged between the gas separator and the supercooler, and the heating electronic expansion valve is arranged between the supercooler and the outdoor heat exchanger.

In some embodiments, the method further comprises: controlling the defrosting solenoid valve to be turned off, controlling the liquid inlet valve to be turned off, controlling the exhaust valve to be turned off, and controlling the supercooling solenoid valve, the heating electronic expansion valve and the supercooler electronic expansion valve to all resume normal control after receiving a defrosting end instruction; and controlling the first electrical heating member to stop operation.

The embodiments use the hot air bypass and gas separation heating technology, so that the high-temperature and high-pressure refrigerant exiting from the exhaust is directly guided to the outdoor heat exchanger for defrosting and to the indoor heat exchanger for heating during defrosting. The condensed refrigerant directly enters the gas separator, and then enters the heating tank from the gas separator so as to be heated and evaporated within the heating tank, so that it is possible to maintain that the heating capacity is not attenuated. The method of the present invention can achieve the effect of no switch of the four-way valve, no attenuation of heating capacity and fast defrosting during defrosting.

The embodiments of the present invention provide a software for implementing the technical solution described in the above-described embodiments.

The present invention provide a non-transitory computer readable storage medium having computer-executable instructions stored thereon, wherein the computer-executable instructions implements the continuous heating control method in any of the above-described method embodiments.

The above-described software is stored in the above-described storage medium, and the storage medium comprises but is not limited to: an optical disk, a floppy disk, a hard disk, a erasable memory, or the like.

In the present invention, a hot air bypass branch can be added at the outlet pipe of the oil separator, and connected between the heating electronic expansion valve and the outdoor heat exchanger for defrosting. The branch is provided with a solenoid valve. The gas separator is provided with a heating tank configured to heat the gas separator to evaporate the liquid refrigerant during defrosting. The embodiments of the present invention can achieve the effect of no switch of the four-way valve, no attenuation of heating capacity and fast defrosting during defrosting, thereby avoid affecting the comfort as much as possible.

The device embodiments described above are merely illustrative, wherein the units described as separate members may or may not be physically separated, and the members displayed as units may or may not be physical units, that is, they may be located in one place, or may also be distributed on multiple network elements. Some or all of the modules thereof may be selected to achieve the object of the solution in this embodiment according to actual needs.

From the description of the above embodiments, those skilled in the art may clearly understand that each embodiment may be implemented by means of software plus a requisite general hardware platform, and certainly may also be implemented by hardware. Based on this understanding, the above-described technical solutions may be embodied in the form of a software product in essence or part that contributes to the known art. The computer software product may be stored in a computer-readable storage medium, such as ROM/RAM, magnetic disk, optical disk, or the like, and comprises several instructions so that the method described in each embodiment or some parts of the embodiment is implemented by a computer device (which may be a personal computer, a server, or a network device, etc.).

## Claims

1. A continuous heating control system, comprising: a bypass pipeline, an oil separator (2), an outdoor heat exchanger (3), a gas separator (4), a defrosting solenoid valve (1) and a heating structure, wherein:
the defrosting solenoid valve (1) is arranged on the bypass pipeline, wherein one end of the bypass pipeline is connected to the oil separator (2), and another end of the bypass pipeline is connected to the outdoor heat exchanger (3), and
the heating structure is arranged at a bottom of the gas separator (4) and configured to heat the gas separator (4), wherein the heating structure comprises:
a heating tank (5) arranged at the bottom of the gas separator (4), wherein a first pipeline connected to the heating tank is provided at the bottom of the gas separator, wherein the first pipeline is provided with a liquid inlet valve (7), and
a first electrical heating member (6) arranged outside the heating tank (5);
the continuous heating control system further comprising: a supercooler electronic expansion valve (8), a supercooler (9), an enthalpy increasing tube and a first branch,
wherein a first end of the first branch is arranged in a pipeline between a rear end of the supercooler electronic expansion valve (8) and the supercooler (9), a second end of the first branch is connected to the enthalpy increasing tube, the first branch is provided with a second electrical heating member (10) and a first enthalpy increasing valve (11), and a third end of the first branch is arranged between the second electrical heating member (10) and the first enthalpy increasing valve (11) and is connected to the heating tank (5);
the continuous heating control system further comprising: a second pipeline connected between an outlet pipe of the gas separator (4) and the heating tank (5), wherein the second pipeline is provided with a pressure balancing valve (12); and a third pipeline, wherein one end of the third pipeline is connected to the heating tank (5), and another end of the third pipeline is connected to two branches, one branch of the two branches being connected to a suction pipe of a compressor (13), and another branch of the two branches being connected to an enthalpy increasing tube, wherein the one branch connected to the suction pipe of the compressor (13) is provided with an exhaust valve (14), and the another branch connected to the enthalpy increasing tube is provided with a second enthalpy increasing valve (15); and
the continuous heating control system further comprising: a heating electronic expansion valve (16), a jet enthalpy electronic expansion valve (17), a supercooling solenoid valve (18) and a four-way valve (19), wherein the heating electronic expansion valve (16) is provided on a pipeline between the outdoor heat exchanger (3) and the supercooler (9), the jet enthalpy electronic expansion valve (17) is provided on a pipeline from the first enthalpy increasing valve (11) to the supercooler (9), and the supercooling solenoid valve (18) is provided on a pipeline from the supercooler (9) to the gas separator (4).

2. **The** continuous heating control system according to claim 1, wherein one end of the defrosting solenoid valve (1) is connected to a front portion or a rear portion of a capillary tube of the outdoor heat exchanger (3).

3. An air-conditioning device, comprising: the continuous heating control system according to claim 1 or 2.

4. A continuous heating control method, applied to the continuous heating control system according to claim 1 or 2, comprising:
controlling the defrosting solenoid valve (1) to be turned on, controlling a supercooling solenoid valve (18) to be turned on, controlling a liquid inlet valve (7) to be turned on, controlling an exhaust valve (14) to be turned on, controlling a heating electronic expansion valve (16) to be turned off, and controlling a supercooler electronic expansion valve (8) to be turned on to a maximum number of steps after receiving a defrosting start instruction (S501); and
controlling a first electrical heating member (6) to start operation (S502);
wherein the supercooling solenoid valve (18) is arranged between a gas separator (4) and a supercooler (9), and the heating electronic expansion valve (16) is arranged between the supercooler (9) and the outdoor heat exchanger (3).

5. **The** continuous heating control method according to claim 4, further comprising:
controlling the defrosting solenoid valve (1) to be turned off, controlling the liquid inlet valve (7) to be turned off, controlling the exhaust valve (14) to be turned off, and controlling the supercooling solenoid valve (18), the heating electronic expansion valve (16) and the supercooler electronic expansion valve (8) to all resume normal control after receiving a defrosting end instruction; and
controlling the first electrical heating member (6) to stop operation.

6. A non-transitory computer-readable storage medium having stored thereon a computer program which, when executed by a processor, implements the method according to claim 4 or 5.

## Patentansprüche

1. Ein kontinuierliches Heizungssteuerungssystem, umfassend: eine Bypassleitung, einen Ölabscheider (2), einen Außenwärmetauscher (3), einen Gasabscheider (4), ein Abtau-Magnetventil (1) und eine Heizstruktur, wobei:
das Abtau-Magnetventil (1) an der Bypassleitung angeordnet ist, wobei ein Ende der Bypassleitung mit dem Ölabscheider (2) verbunden ist und ein anderes Ende der Bypassleitung mit dem Außenwärmetauscher (3) verbunden ist, und
die Heizstruktur an einem Boden des Gasabscheiders (4) angeordnet und dazu ausgelegt ist, den Gasabscheider (4) zu erwärmen, wobei die Heizstruktur umfasst:
einen Heiztank (5), der am Boden des Gasabscheiders (4) angeordnet ist, wobei eine mit dem Heiztank verbundene erste Leitung am Boden des Gasabscheiders vorgesehen ist, wobei die erste Leitung mit einem Flüssigkeitseinlassventil (7) versehen ist, und
ein erstes elektrisches Heizelement (6), das außerhalb des Heiztanks (5) angeordnet ist; wobei das kontinuierliche Heizungssteuerungssystem ferner umfasst:
ein elektronisches Unterkühler-Expansionsventil (8), einen Unterkühler (9), ein Enthalpieerhöhungsrohr und einen ersten Zweig,
wobei ein erstes Ende des ersten Zweigs in einer Leitung zwischen einem hinteren Ende des elektronischen Unterkühler-Expansionsventils (8) und dem Unterkühler (9) angeordnet ist, ein zweites Ende des ersten Zweigs mit dem Enthalpieerhöhungsrohr verbunden ist, der erste Zweig mit einem zweiten elektrischen Heizelement (10) und einem ersten Enthalpieerhöhungsventil (11) versehen ist und ein drittes Ende des ersten Zweigs zwischen dem zweiten elektrischen Heizelement (10) und dem ersten Enthalpieerhöhungsventil (11) angeordnet und mit dem Heiztank (5) verbunden ist;
wobei das kontinuierliche Heizungssteuerungssystem ferner umfasst: eine zweite Leitung, die zwischen einem Auslassrohr des Gasabscheiders (4) und dem Heiztank (5) angeschlossen ist, wobei die zweite Leitung mit einem Druckausgleichsventil (12) versehen ist; und eine dritte Leitung, wobei ein Ende der dritten Leitung mit dem Heiztank (5) verbunden ist und ein anderes Ende der dritten Leitung mit zwei Zweigen verbunden ist, wobei ein Zweig der beiden Zweige mit einem Saugrohr eines Kompressors (13) verbunden ist und ein anderer Zweig der beiden Zweige mit einem Enthalpieerhöhungsrohr verbunden ist, wobei der eine mit dem Saugrohr des Kompressors (13) verbundene Zweig mit einem Auslassventil (14) versehen ist und der andere mit dem Enthalpieerhöhungsrohr verbundene Zweig mit einem zweiten Enthalpieerhöhungsventil (15) versehen ist; und
wobei das kontinuierliche Heizungssteuerungssystem ferner umfasst: ein elektronisches Heizungs-Expansionsventil (16), ein elektronisches Strahlenthalpie-Expansionsventil (17), ein Unterkühlungs-Magnetventil (18) und ein Vierwegeventil (19), wobei das elektronische Heizungs-Expansionsventil (16) an einer Leitung zwischen dem Außenwärmetauscher (3) und dem Unterkühler (9) vorgesehen ist, das elektronische Strahlenthalpie-Expansionsventil (17) an einer Leitung vom ersten Enthalpieerhöhungsventil 11) zum Unterkühler (9) vorgesehen ist und das Unterkühlungs-Magnetventil (18) an einer Leitung vom Unterkühler (9) zum Gasabscheider (4) vorgesehen ist.

2. Das kontinuierliche Heizungssteuerungssystem nach Anspruch 1, wobei ein Ende des Abtau-Magnetventils (1) mit einem vorderen Abschnitt oder einem hinteren Abschnitt eines Kapillarrohrs des Außenwärmetauschers (3) verbunden ist.

3. Eine Klimatisierungsvorrichtung, umfassend: das kontinuierliche Heizungssteuerungssystem nach Anspruch 1 oder 2.

4. Ein kontinuierliches Heizungssteuerungsverfahren, angewendet auf das kontinuierliche Heizungssteuerungssystem nach Anspruch 1 oder 2, umfassend:
Steuern des Abtau-Magnetventils (1) derart, dass es eingeschaltet wird, Steuern eines Unterkühlungs-Magnetventils (18) derart, dass es eingeschaltet wird, Steuern eines Flüssigkeitseinlassventils (7) derart, dass es eingeschaltet wird, Steuern eines Auslassventils (14) derart, dass es eingeschaltet wird, Steuern eines elektronischen Heizungs-Expansionsventils (16) derart, dass es ausgeschaltet wird, und Steuern eines elektronischen Unterkühler-Expansionsventils (8) derart, dass es nach dem Empfang eines Abtaustartbefehls auf eine maximale Anzahl von Schritten eingeschaltet wird (S501); und
Steuern eines ersten elektrischen Heizelements (6) derart, dass es den Betrieb aufnimmt (S502);
wobei das Unterkühlungs-Magnetventil (18) zwischen einem Gasabscheider (4) und einem Unterkühler (9) angeordnet ist und das elektronische Heizungs-Expansionsventil (16) zwischen dem Unterkühler (9) und dem Außenwärmetauscher (3) angeordnet ist.

5. Das kontinuierliche Heizungssteuerungsverfahren nach Anspruch 4, ferner umfassend:
Steuern des Abtau-Magnetventils (1) derart, dass es ausgeschaltet wird, Steuern des Flüssigkeitseinlassventils (7) derart, dass es ausgeschaltet wird, Steuern des Auslassventils (14) derart, dass es ausgeschaltet wird, und Steuern des Unterkühlungs-Magnetventils (18), des elektronischen Heizungs-Expansionsventils (16) und des elektronischen Unterkühler-Expansionsventils (8) derart, dass sie nach dem Empfang eines Abtauendebefehls alle wieder zur normalen Steuerung zurückkehren; und
Steuern des ersten elektrischen Heizelements (6) derart, dass es den Betrieb einstellt.

6. Ein nichtflüchtiges computerlesbares Speichermedium, auf dem ein Computerprogramm gespeichert ist, das, wenn es von einem Prozessor ausgeführt wird, das Verfahren nach Anspruch 4 oder 5 implementiert.

## Revendications

1. Un système de commande de chauffage continu, comprenant : une conduite de dérivation, un séparateur d'huile (2), un échangeur de chaleur extérieur (3), un séparateur de gaz (4), une électrovanne de dégivrage (1) et une structure de chauffage, dans lequel :
l'électrovanne de dégivrage (1) est agencée sur la conduite de dérivation, dans lequel une extrémité de la conduite de dérivation est raccordée au séparateur d'huile (2), et une autre extrémité de la conduite de dérivation est raccordée à l'échangeur de chaleur extérieur (3), et
la structure de chauffage est agencée au niveau d'un fond du séparateur de gaz (4) et configurée pour chauffer le séparateur de gaz (4), dans lequel la structure de chauffage comprend :
un réservoir de chauffage (5) agencé au niveau du fond du séparateur de gaz (4), dans lequel une première conduite raccordée au réservoir de chauffage est prévue au niveau du fond du séparateur de gaz, dans lequel la première conduite est munie d'une vanne d'entrée de liquide (7), et
un premier élément chauffant chauffage électrique (5) ; le système de commande de chauffage continu comprenant en outre : un détendeur électronique de sous-refroidisseur (8), un sous-refroidisseur (9), un tube d'augmentation d'enthalpie et une première branche,
dans lequel une première extrémité de la première branche est agencée dans une conduite entre une extrémité arrière du détendeur électronique de sous-refroidisseur (8) et le sous-refroidisseur (9), une deuxième extrémité de la première branche est raccordée au tube d'augmentation d'enthalpie, la première branche est munie d'un deuxième élément chauffant électrique (10) et d'une première vanne d'augmentation d'enthalpie (11), et une troisième extrémité de la première branche est agencée entre le deuxième élément chauffant chauffage électrique (5) ;
le système de commande de chauffage continu comprenant en outre : une deuxième conduite raccordée entre un tuyau de sortie du séparateur de gaz (4) et le réservoir de chauffage (5), dans lequel la deuxième conduite est munie d'une vanne d'équilibrage de pression (12) ; et une troisième conduite, dans lequel une extrémité de la troisième conduite est raccordée au réservoir de chauffage (5), et une autre extrémité de la troisième conduite est raccordée à deux branches, une branche des deux branches étant raccordée à un tuyau d'aspiration d'un compresseur (13), et une autre branche des deux branches étant raccordée à un tube d'augmentation d'enthalpie, dans lequel la branche raccordée au tuyau d'aspiration du compresseur (13) est munie d'une vanne d'échappement (14), et l'autre branche raccordée au tube d'augmentation d'enthalpie est prévue d'une deuxième vanne d'augmentation d'enthalpie (15) ; et
le système de commande de chauffage continu comprenant en outre : un détendeur électronique de chauffage (16), un détendeur électronique d'enthalpie par injection (17), une électrovanne de sous-refroidissement (18) et une vanne à quatre voies (19), dans lequel le détendeur électronique de chauffage (16) est prévu sur une conduite entre l'échangeur de chaleur extérieur (3) et le sous-refroidisseur (9), le détendeur électronique d'enthalpie par injection (17) est prévu sur une conduite de la première vanne d'augmentation d'enthalpie (11) au sous-refroidisseur (9), et l'électrovanne de sous-refroidissement (18) est prévue sur une conduite allant du sous-refroidisseur (9) au séparateur de gaz (4).

2. **Le** système de commande de chauffage continu selon la revendication 1, dans lequel une extrémité de l'électrovanne de dégivrage (1) est raccordée à une partie avant ou à une partie arrière d'un tube capillaire de l'échangeur de chaleur extérieur (3).

3. Un dispositif de climatisation, comprenant : le système de commande de chauffage continu selon la revendication 1 ou 2.

4. Un procédé de commande de chauffage continu, appliqué au système de commande de chauffage continu selon la revendication 1 ou 2, comprenant :
commander l'activation de l'électrovanne de dégivrage (1), commander l'activation d'une électrovanne de sous-refroidissement (18), commander l'activation d'une vanne d'entrée de liquide (7), commander l'activation d'une vanne d'échappement (14), commander la désactivation d'un détendeur électronique de chauffage (16), et commander l'ouverture d'un détendeur électronique de sous-refroidisseur (8) jusqu'à un nombre maximal de pas après réception d'une instruction de début de dégivrage (S501) ; et
commander à un premier élément chauffant électrique (6) de commencer à fonctionner (S502) ;
dans lequel l'électrovanne de sous-refroidissement (18) est agencée entre un séparateur de gaz (4) et un sous-refroidisseur (9), et le détendeur électronique de chauffage (16) est agencé entre le sous-refroidisseur (9) et l'échangeur de chaleur extérieur (3).

5. Le procédé de commande de chauffage continu selon la revendication 4, comprenant en outre :
commander la désactivation de l'électrovanne de dégivrage (1), commander la désactivation de la vanne d'entrée de liquide (7), commander la désactivation de la vanne d'échappement (14), et commander à l'électrovanne de sous-refroidissement (18), au détendeur électronique de chauffage (16) et au détendeur électronique de sous-refroidisseur (8) de reprendre tous une commande normale après réception d'une instruction de fin de dégivrage ; et
commander au premier élément chauffant électrique (6) de cesser de fonctionner.

6. Un support de stockage non transitoire lisible par ordinateur sur lequel est stocké un programme informatique qui, lorsqu'il est exécuté par un processeur, met en œuvre le procédé selon la revendication 4 ou 5.
